# EUROPEAN PATENT APPLICATION

(11) **EP 2 634 680 A1**
(43) Date of publication of application: **04.09.2013**
(21) Application number: 12157445.3
(22) Date of filing: 29.02.2012
(51) Int. Cl.: G06F 3/048, G06F 17/30

(54) **Graphical user interface interaction on a touch-sensitive device**

(71) Applicant: BlackBerry Limited, Waterloo ON N2L 3W8 (CA); Research in Motion TAT AB, 21140 Malmö (SE)
(72) Inventor: Larsby, Lars-Johan Olof, 211 40 Malmö (SE); Lincoln, Jan Staffan, 211 40 Malmö (SE)
(74) Representative: Patel, Binesh

(57) **Abstract**

A method, device and computer readable memory for interaction with a graphical user interface of a computing device associated with a touch-sensitive input device is provided. Proximity information of an object performing a gesture in relation to the graphical user information is used in predicting one or more possible gesture events that may occur with the touch-sensitive input device. The predicted gesture events are used to initiate or pre-cache possible gesture events that would occur with the graphical user interface to provide a more responsive graphical user interface when the gesture event does occur.

## Description

### TECHNICAL FIELD

The current application relates to graphical user interfaces, and in particular to interaction with the graphical user interface through a touch-sensitive input device.

### BACKGROUND

The use of touch-sensitive input devices are increasingly prevalent and are often used to provide a convenient input mechanism for interacting with computing devices. Typical touch-sensitive input devices include touch-sensitive display on portable electronic devices, although other touch-sensitive devices are also common and include touch-sensitive monitors, touch-sensitive white boards, touch-sensitive mice, and touch-sensitive tablets. Although touch-sensitive input devices provide a flexible input mechanism for user interaction with the graphical user interface, the input to the device is only provided through a two-dimensional interface when an object, such as a finger or stylus, contacts touch-sensitive display. The processing of the user interaction by the computing device associated with the touch-sensitive display can impact responsiveness of the graphical user interface.

It is desirable to have a touch-sensitive input method and device that provides improved graphical user interface interaction with a touch-sensitive input device.

### SUMMARY

In accordance with the present disclosure, there is provided a method of interaction with a graphical user interface of a computing device associated with a touch-sensitive input device, the method comprising receiving proximity information indicative of a proximity of an object above the touch-sensitive input device as the object performs at least a portion of a gesture prior to a contact with the touch-sensitive input device; predicting one or more possible gesture events associated with the gesture based on the proximity information and the graphical user interface based on one or more locations on the graphical user interface where the one or more possible gesture events may potentially occur; and initiating at least one action associated with at least one of the predicted one or more possible gesture events in relation to the graphical user interface prior to the occurrence of the gesture event define by the contact with the touch-sensitive input device.

In accordance with another aspect of the present disclosure, there is provided a device for providing a graphical user interface coupled to a touch-sensitive input device providing a graphical user interface on a display, the device comprising a processor; a memory coupled to the processor comprising instructions for: receiving proximity information indicative of a proximity of an object above the touch-sensitive input device as the object performs at least a portion of a gesture prior to a contact with the touch-sensitive input device; predicting one or more possible gesture events associated with the gesture based on the proximity information and the graphical user interface based on one or more locations on the graphical user interface where the one or more possible gesture events may potentially occur; and initiating at least one action associated with at least one of the predicted one or more possible gesture events in relation to the graphical user interface prior to the occurrence of the gesture event define by the contact with the touch-sensitive input device.

In accordance with yet another aspect of the present disclosure, there is provided a computer readable memory containing instructions for a method of interaction with a graphical user interface of a computing device associated with a touch-sensitive input device, the instructions when executed by a processor of the computing device comprising receiving proximity information indicative of a proximity of an object above the touch-sensitive input device as the object performs at least a portion of a gesture prior to a contact with the touch-sensitive input device; predicting one or more possible gesture events associated with the gesture based on the proximity information and the graphical user interface based on one or more locations on the graphical user interface where the one or more possible gesture events may potentially occur; and initiating at least one action associated with at least one of the predicted one or more possible gesture events in relation to the graphical user interface prior to the occurrence of the gesture event define by the contact with the touch-sensitive input device.

### BRIEF DESCRIPTION OF THE DRAWINGS

Further features and advantages of the present disclosure will become apparent from the following detailed description, taken in combination with the appended drawings, in which:
Figure 1 depicts a diagram of using a touch-sensitive input device;
Figure 2 depicts an illustrative graphical user interface on a computing device having an integrated touch-sensitive input display;
Figure 3 depicts a graphical user interface of the computing device displaying a virtual keyboard;
Figures 4 and 5 depict a modified user interface of the computing device;
Figure 6 depicts a further example of the touch-sensitive device for providing graphical user interface interaction;
Figure 7 depicts a method of graphical user interface interaction with a computing device associated with a touch-sensitive input device;
Figure 8 depicts a further method of graphical user interface interaction with a computing device associated with a touch-sensitive input device;
Figure 9 depicts a further method of graphical user interface interaction with a computing device associated with a touch-sensitive input device; and
Figure 10 shows a block diagram of a portable electronic device in accordance with an illustrative embodiment.

### DETAILED DESCRIPTION

The details and particulars of these aspects of the technology will now be described below, by way of example, with reference to the attached drawings.

A touch-sensitive input device may use input gestures to control or interact with a computing device in relation to a graphical user interface. Common input gestures include tap, double tap, pinch open, pinch close, flick, drag, touch and hold, two-finger scroll, swipe, and rotate although other gestures are possible. A user performs a gesture using an object such as a finger or a stylus or other appropriate device. For brevity and clarity, the object is described as a finger in the current description; however it will be appreciated that other objects may be used with touch-sensitive device. When the user performs the gesture, the computing device determines a corresponding gesture event and performs an appropriate action.

As described further herein, the touch-sensitive device may augment a two-dimensional (2D) gesture event, by detecting a proximity or height of the finger during at least a portion of the gesture. The proximity or height information may be used by the device to improve a user interaction by enabling a more responsive graphical user interface. It is contemplated that the touch-sensitive input of the device may be integral with the computing device, such as a touch-screen or track pad. It is further contemplated that the touch-sensitive input device of a computing device may be external to the computing device, such as a separate touch-sensitive monitor, touch-sensitive input panel, touch-sensitive mouse or other touch sensitive devices. Regardless of whether the touch-sensitive device is provided as a component of the computing device itself, or as an external device, the computing device receives the touch information, which may include the additional proximity, height, velocity or direction information to which gesture prediction can be performed. The computing device may use the proximity information, that is input indicative of the movement of the object, including the height, direction, velocity or direction information, to predict one or more possible or likely gestures an associated possible actions prior to, or during, a gesture event completion. The computing device may then use the predicted action to perform tasks prior to the action actually occurring or completing in order to improve responsiveness of the graphical user interface. For example the computing device may begin to pre-load information that one or more possible actions will require so that the apparent responsiveness of the computing device is improved. Although the input gesture event, such as a tap, scroll, pinch etc, typically only includes two-dimensional information, the physical gesture required is done in three-dimensional (3D) space. As such, additional information present in the gesture is typically not used for controlling the computing device but may be utilized to improve user interaction with the graphical user interface of the computing device but may be utilized to improve responsiveness of the graphical user interface of the computing device.

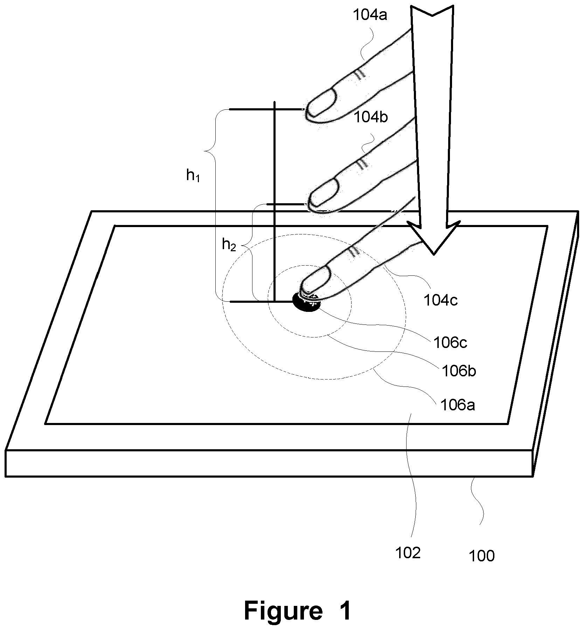

Figure 1 depicts a diagram of a touch-sensitive input device 100, or simply the device, may be part of a computing device such as a mobile computing device having a touch-sensitive display, such as a mobile phone, a media player, a tablet, a laptop or other portable computing device. Further, it is contemplated that the touch-sensitive input device may be part of desktop computing devices, in-automotive control and navigation computing devices or other computing devices that include touch-sensitive displays. It is further contemplated that the touch-input device can be provided independently of the computing device or an associated display device. The touch-sensitive input device includes an input area 102 which may be dedicated for receiving input from the user or may also provide display functionality.

As depicted in Figure 1, a user initiates a gesture by moving a finger towards the touch-sensitive input device to tap it at a contact point. In Figure 1, it is assumed that the gesture corresponds to a gesture event, which may be used for example to select an object or initiate an action. At a position 104a, the user's finger may be a height, h₁, above the touch-sensitive input device 100. At a position 104b, the user's finger approaches the touch-sensitive sensitive input device 100 and is at a height, h₂, above it. As the user continues the gesture, the finger will contact the touch-sensitive input device 100 in position 104c at a particular location on the touch-sensitive input device 100. When the user's finger taps the input device 100 an appropriate action may be taken based on the generated gesture event, such as opening a file, playing media, starting a program, navigating to a web page, or other actions that may be initiated. Regardless of the particular action to be taken when the user taps the touch-sensitive input device 100, the action is not initiated by an associated computing device until the actual tap-input gesture is determined from the gesture. It should be noted that if the touch-sensitive input device 100 does not have display capabilities the action performed by the user would be mapped to a display providing the graphical user interface.

However, as depicted in Figure 1, the proximity or height information of the finger during at least a portion of the gesture may be used to predict a possible or likely action. A velocity and direction component may also be utilized in prediction of the gesture that may occur. As the user begins the gesture, the possible or likely contact area is relatively large as depicted by dashed line 106a. As the user continues the gesture by bringing their finger closer to the touch sensitive input device 102, the likely contact area is reduced as depicted by dashed line 106b. The touch-sensitive input device 100 may determine one or more possible actions that are within the possible contact area. As will be appreciated, as the user's finger gets closer to the screen, the likely contact area gets smaller. The touch-sensitive input device 100 may predict one or more likely gestures or actions from within the likely contact area. With one or more likely actions predicted, the associated computing device may determine if any tasks can be initiated or pre-cached in order to the improve the user interaction experience if the one or more predicted actions is in fact taken by the user.

As a simple example, suppose the user input on the touch-sensitive input device 100 is associated with a graphical user interface displaying a single icon, which when tapped by the user displays a web page. Rather than waiting until the user actually taps the icon to request the web page, the computing device may predict that the user is likely to click on the icon based on possible gesture events, and request the web page before the user has actually completes the gesture. As a result the web page will be available for the user quicker than if no prediction of the possible action is used. The computing device may pre-initiate multiple actions based upon predicted user interaction with the touch-sensitive device 100 to improve speed and responsiveness of the graphical user interface. Once the actual contact or gesture has occurred would the particular action associated with the completed gesture event can then be completed or occur, more quickly than if no action was taken before competition of the gesture event.

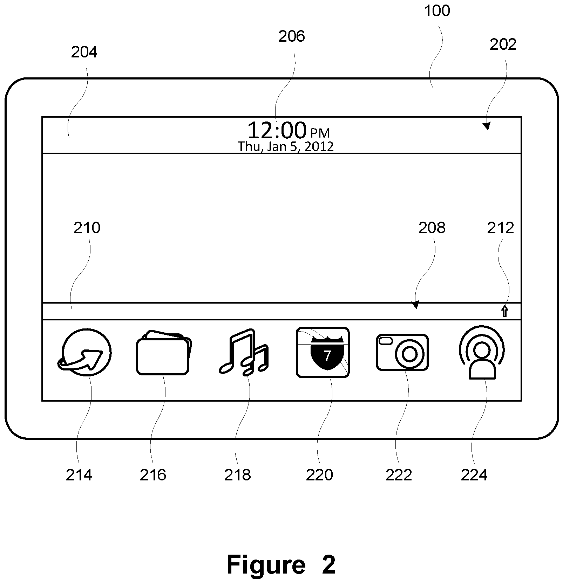

Figure 2 depicts an illustrative user interface of a touch-sensitive device 100. As further described below, the user's interaction with the graphical user interface can be improved by predicting a gesture event prior to the actual occurrence of the gesture event and performing some action preemptively thus improving responsiveness. The user interface 202 comprises various components, and as depicted, it includes a top ribbon 204 which may display various information, such as the date and time 206. The user interface may further include an expandable lower panel or frame 208. The lower panel 208 may include a panel selection ribbon 210, which may allow different panels, such as 'All', 'Favorites', 'Media' and 'Games' to be selected and displayed in the lower panel 208. The panel selection ribbon 210 may further include an arrow 212 or other icons for expanding the lower panel 208 in order to display more icons. The lower panel 208 displays a plurality of icons 214, 216, 218, 220, 222, 224 associated with the selected panel in the panel selection ribbon 210. The depicted icons for illustrative purposes include a browser icon 216 for opening a web browser and viewing web pages, a picture icon 216 for opening a photo viewing application, a media icon 218 for opening a media player application and playing media files, a map icon 220 for opening a map application and displaying a map, a camera icon 222 for opening a camera application for capturing pictures and a podcast icon 224 for opening a podcast application for downloading and playing pod casts. As will be appreciated, a user can execute an application associated with an icon by tapping on the icon display on the touch-sensitive input device. A gesture event may include information about the location of the contact in order to determine the appropriate icon for the gesture event.

In the following description of Figure 2, it is assumed that the opening of the web browser, by tapping on the browser icon 216, and the opening of the map application, by tapping on the map icon 220, are each associated with actions or gesture events that can be executed in advance of actually opening the associated application. In particular, it is assumed that the web browser is associated with an action of requesting a home page web page. Similarly, the map application may be associated with retrieving and displaying a map of the user's current location. Each of the described actions may have an associated delay as the requested information, either the web page or the map information, is returned. Accordingly, the responsiveness of the graphical user interface may be improved by requesting information, pre-generating data or pre-executing applications before the user actually taps on the associated icon. As described above, the proximity information of a gesture may be used to predict the gesture event, and then if for example the predicted gesture event indicates a tapping on the browser icon 214, the web page may be requested before the user actually makes contact on the browser icon 214. If the user performs the predicted gesture, in this case taps on the browser icon 214, the web page will be available for display quicker than if the pre-action had not been performed. Similarly, if the predicted gesture event is associated with tapping on the map icon 220, the action may request the map information associated with the current location. If the user continues the gesture and taps the map icon 220 the map information will be available sooner than if the action was not taken based on the predicted gesture event.

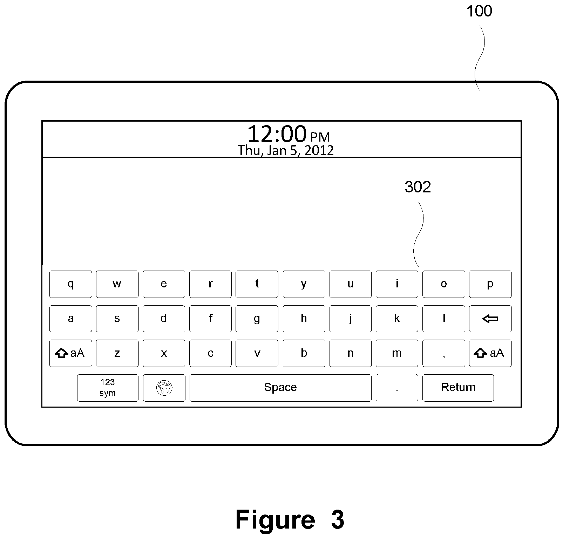

A further example of predictive graphical user interface interaction to improve responsiveness is described with regards to Figures 3, 4 and 5. In contrast to the examples described above with reference to Figure 2, the following example does not request information before a gesture event occurs; rather the action performed based on a predicted gesture event modifies the displayed graphical interface in order to improve the user's experience.

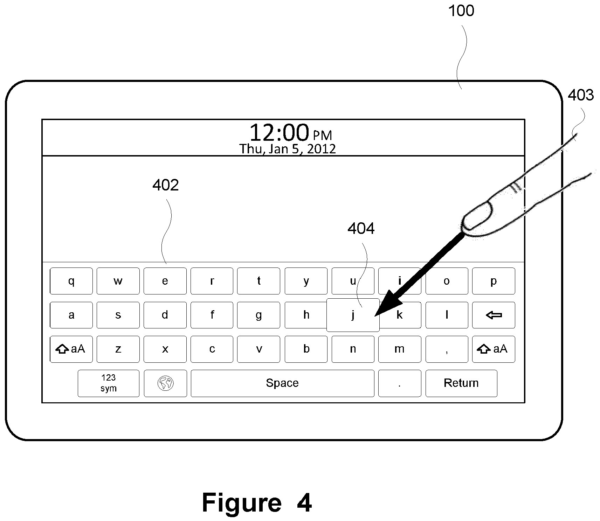

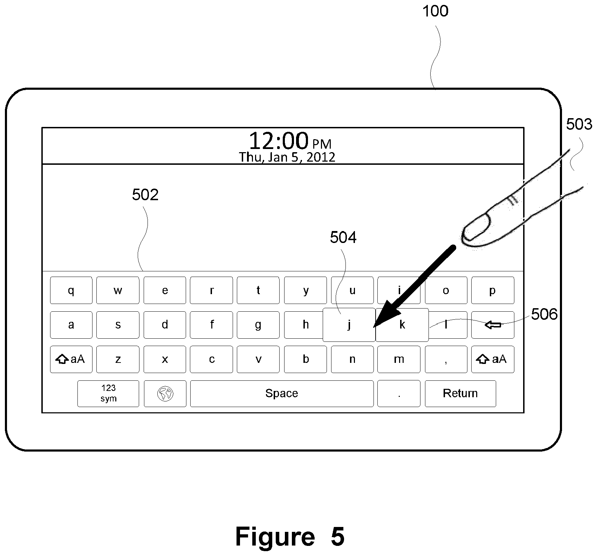

Figure 3 depicts a user interface of the device displaying a keyboard. Figures 4 and 5 depict a modified user interface of the device based on a predicted gesture event. As depicted, the user interface includes a virtual keyboard 302 that allows a user to input characters by tapping on the desired character. The virtual keyboard 302 displayed in Figure 3 provides a plurality of characters, which have generally the same size for tapping on them. When no gesture events are predicted, the virtual keyboard 302 may be displayed. As a user begins to type a character, the proximity information may be used to predict one or more possible gesture events. The predicted gesture events may include location information indicating a predicted location of the eventual contact or tap on the screen. The predicted gesture event may be used to modify the displayed virtual keyboard.

Turning to Figure 4, a modified keyboard 402 is displayed. In Figure 4, it is assumed that the user has begun to move their finger 403 down towards the 'j' key 404. As the proximity of the user's finger is detected, the device modifies the display of the keyboard in order to increase the size of the predicted key that will be tapped. That is, the device uses the proximity information as the user begins the gesture to predict the key that is likely to be pressed and then modifies the displayed keyboard by enlarging the predicted key 404.

In Figure 4, it is assumed that the proximity information indicates that the user is likely to tap the 'j' key. However, it is possible that the proximity information will not predict a single key, but rather one or more keys are likely to be tapped.

Turning to Figure 5, a modified keyboard 502 is depicted. The modified keyboard 502 depicts two enlarged keys 504, 506. As a user begins a gesture with their finger 503 to tap a key on the keyboard, the proximity information indicates that the user may tap the keyboard in between the 'j' key 504 and the 'k' key 506. As depicted, once the predicted gesture is determined, the displayed keyboard 502 can be adjusted so that the key that are predicted to be tapped are enlarged.

The above has described an illustrative gesture event. The gesture associated with a gesture event typically involves moving a finger towards the display in a direction generally perpendicular to the screen until contact is made. It is contemplated that the proximity information may also be used with gestures associated with different gesture events and that a direction or velocity component may be utilized in predicting the possible target of the gesture event. Direction and/or velocity information provided in the proximity information may also be used in terms of the facilitating additional presentation aspects of the graphical user interface, or actions defined by the gesture and contact. For example the proximity information may be utilized to define characteristics that are not visual such as audio output such as by interaction with an instrument provided in the graphical user interface. Proximity characteristics after contact with the touch-sensitive display that occur, may also be utilized in determining graphical user interface interaction occurs or how the audio output impacted. That is, a three-dimensional gesture may also include proximity information in a gesture that is terminated on the touch-sensitive device, but may also include gesture events that commence on the touch-sensitive device, or a gesture that includes components before and after contact to determine a desired interaction which may have different impact on a graphical user interface or audio output.

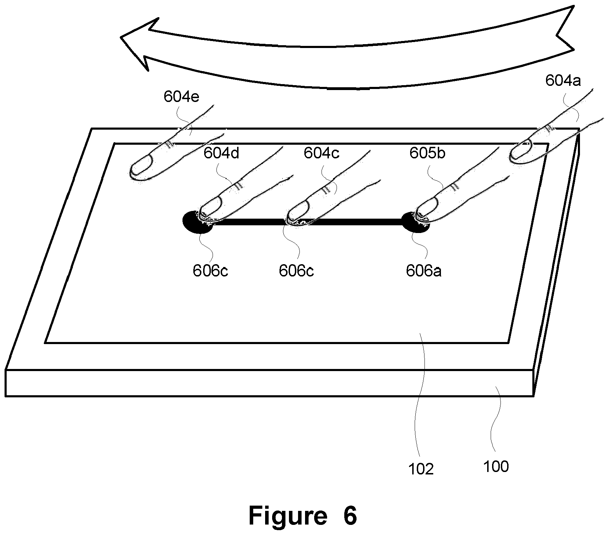

Figure 6 depicts a further example of the touch-sensitive device that may provide an improved interaction with a graphical user interface. As described above with reference to Figure 1, the device 100 includes a touch input area 102, which may be part of a touch-sensitive display or a separate input device. In contrast to Figure 1, which depicts a gesture associated with a gesture event, Figure 6 depicts a scroll gesture event and associated gesture. It is noted that the gesture is considered as the finger movement, including the movement before and after the finger is in contact with the screen. As depicted, the scroll gesture event may be associated with a gesture of the finger moving from position 604a, to 604b as which point the finger makes contact with the screen at location 606a. The gesture continues as the finger moves from position 604b to 604c and 604d, sliding along the screen as depicted by 606b until the lift-off point at 606c. The gesture continues after the finger has lifted off of the screen as depicted at position 606c.

The gesture event depicted in Figure 6 is a scroll gesture event, which may be associated with various actions such as scrolling through a list, scrolling up, down or side to side in a view or other actions. A velocity and angle of contact of the gesture is performed at may be used in determining an amount of scrolling that should occur. That is, if the gesture is performed slowly, the scroll amount will be small, perhaps equal to the distance of the scroll gesture event, whereas if the gesture is performed quickly the scrolling may cover a larger area. Depending on what is being scrolled through a large scroll amount may reach the end of the list or object being scrolled before the scrolling has completed. In such a case, additional items or objects may be retrieved and added to the list for further scrolling.

In Figure 6, it is possible to determine proximity information associated with the gesture before the gesture event occurs and to predict a likely action. Once the likely action is predicted tasks can be performed in order to improve the user's interaction experience. For example, if the user is scrolling through a list of e-mails, the list may be limited to a certain number of previous emails, and if they wish to scroll through additional e-mails, they must first be retrieved. Using the proximity information to predict that a likely action will be a large scrolling of the emails, the device may begin to retrieve the additional e-mails so that they may be ready for scrolling without interrupting the user's experience. Although the gesture events have been described in terms of a single gesture by a single object, the gesture event may comprise multiple contacts, multi-object or multi-finger contact, with the touch-sensitive, where proximity information for each of the multiple objects would be utilized in predicting possible gesture events prior to their occurrence.

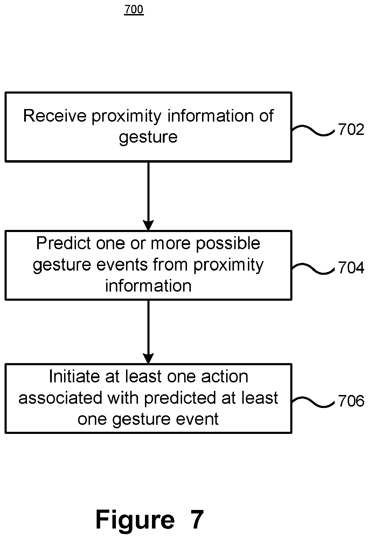

Figure 7 depicts a method of graphical user interface interaction with a computing device associated with a touch-sensitive interface. The method 700 may be implemented by a processor executing instructions stored in a memory of a device associated with a touch-sensitive interface such as a touch-screen, a touch-sensitive monitor, touch-sensitive mouse or other touch-sensitive device. The method receives proximity information of a gesture (702). The proximity information may include information indicating a possible contact location and a height of the user's finger above the touch-sensitive device, direction or vector of motion of the object and velocity of the object. The vector of motion may be determined based upon two-dimensional movement along the touch-sensitive interface but may also be determined based upon a height component determined by an increasing value in proximity information. For example as an object gets closer to a capacitive device the proximity value would increase which can be extrapolated to determine a three-dimensional direction vector and velocity could be determined. The proximity information is then used to predict one or more possible gesture events (704) based on possible contact points on the touch-sensitive device and the corresponding information objection in a graphical user interface which would be interacted with. Each of the predicted gesture events may indicate the predicted contact point of the gesture event as well as the type of the gesture event, such as a gesture event, a scroll gesture event, a pinch gesture event, etc. Once one or more gesture events have been predicted, at least one action associated with one of the gesture events is initiated (706) prior to termination of the gesture. The initiated action and the time at which the initiated action occurs may vary depending on the predicted gesture events. For example, the initiated action may initiate functionality such as requested a web page, retrieving information, or modifying a portion of a graphical user interface. Requesting a web page may occur earlier in the prediction timeline than modifying the graphical user interface due to latency issues. In addition some of the predicted gesture event actions such as requesting a web page may not be the actually executed gesture, in which case the retrieved information may be discarded. Similarly if an application has been pre-executed the operational thread may be executed if the gesture does not terminate in confirmation that the application is to be executed. The prediction of possible gesture events enables the responsiveness of the graphical user interface to be improved enabling a better user interaction with the computing device.

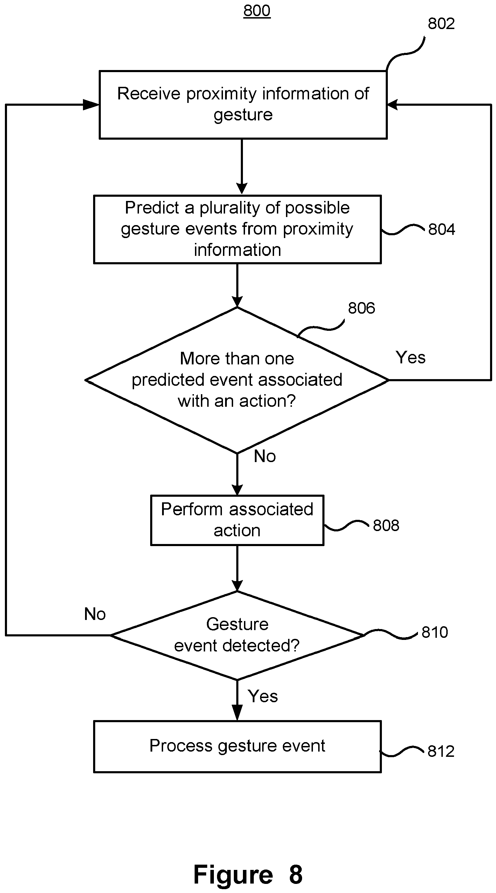

Figure 8 depicts a further method of improving interaction with a computing device associated with a touch-sensitive input device. The method 800 is similar to the method 700 described above; however, the method 800 continues to receive additional proximity information until there is only a single predicted gesture event. The method begins with receiving proximity information of a gesture (802) and then predicts one or more possible gesture events from the proximity information (804). It is determined if more than one gesture event is predicted (806) with the possible gesture events. If there was only one gesture event predicted (No at 806), then the associated action is initiated (808) to prepare for possible confirmation that the associated action with the gesture is to be executed. Once the action is initiated, it is determined if a gesture event is detected (810), and if one is (Yes at 810) it is processed (812). If a gesture event is not detected (No at 810), the method returns to receive further proximity information (802). If it was determined that more than one gesture event was predicted from the proximity information (Yes at 806), the method returns to receive further proximity information (802) in order to possibly reduce the number of predicted gesture events before performing an associated action such as pre-cache, pre-executing or pre-requesting data.

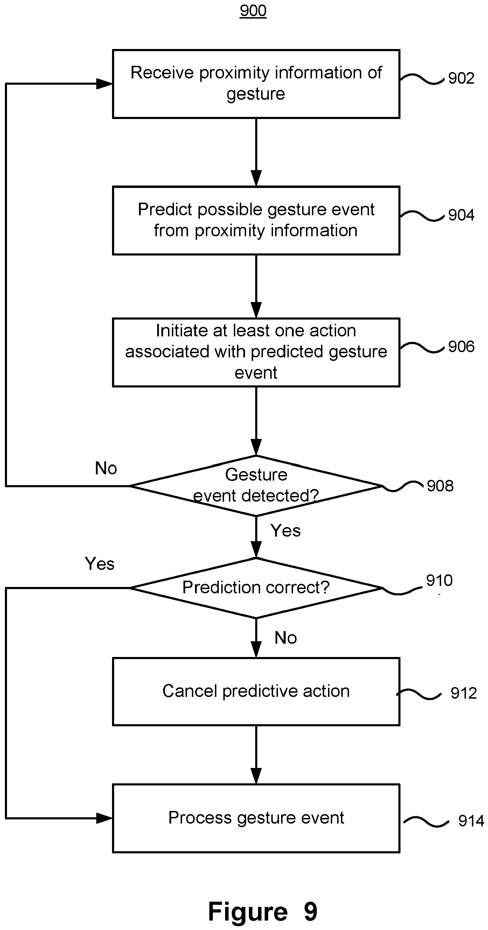

Figure 9 depicts a further method of improving interaction with a computing device associated with a touch-sensitive input device. The method 900 is similar to the method 700 described above; however, the method 900 determines if the predicted gesture event was correct. The method begins with receiving proximity information of a gesture (902) and then predicts a possible gesture event from the proximity information (904). Once the gesture event is predicted, an associated action is initiated (906). Once the action is initiated, it is determined if a gesture event is detected (908). If no gesture event is detected (No at 908), the method returns to receive further proximity information (902). If a gesture event is detected (Yes at 908), it is determined if the predicted gesture event was correct (910) and if it was not correct (No at 910), the initiated action is cancelled (912) and the gesture event is processed (914). If however the predicted gesture event is correct (Yes at 910), the gesture event is processed (914) without cancelling the initiated action. In this example multiple actions may be initiated simultaneously if multiple possible events may occur. Actions that are performed prior to the gesture event and are not associated with the final resulting gesture event are discarded.

The above description has described using proximity information in order to improve interaction with a computing device providing a graphical user interface associated with a touch-sensitive input device. The proximity information may be received in various ways. For example, a touch-sensitive device may provide a capacitive layer, which may detect the presence of an object above the surface. Alternatively, the proximity information may be received through the use of one or more image capture devices located about the display of the device. For example, two cameras may be located about a border of the screen. Alternatively, a camera could be located in each corner of the device to detect location. It is contemplated that the cameras may be elevated slightly above a surface of the display screen in order to improve the depth of the information captured or utilize optical elements that allow a wider field of view. Further, the proximity information could be provided through a magnetic sensor, through infrared sensors or other types of sensors.

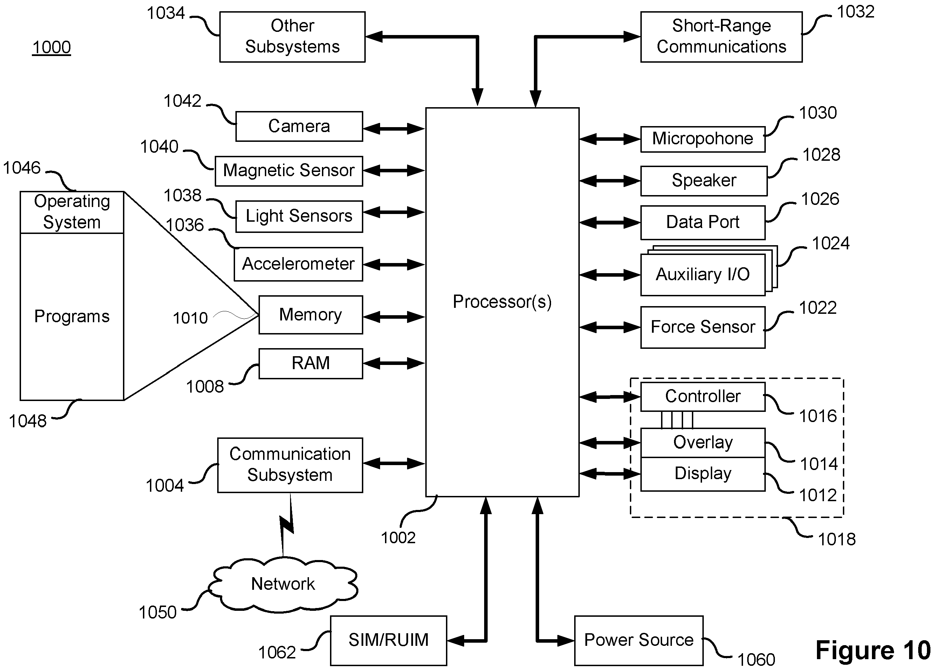

Figure 10 show a block diagram of a portable electronic device in accordance with an illustrative embodiment. Although the illustrative embodiment depicts a device 1000 with a touch-sensitive display, it is contemplated that the touch-sensitive device could be external to the device and connected by a data bus such as a universal serial bus (USB). A processor 1002, a multiple core processor or multiple processors may interface with component or modules of the device to provide functionality required. A touch-sensitive interface is provided by a touch-sensitive display 1018 is coupled to the processor 1002. The touch-sensitive display 1018 may be any suitable touch-sensitive display, such as a capacitive, infrared, optical imaging. One or more infrared or optical sensors may be placed around the touch-sensitive interface to aid in determining the position of the interacting object above the user interface. In the presently described example embodiment, the touch-sensitive display 1018 is a capacitive touch-sensitive display which includes a capacitive touch-sensitive overlay 1014. The overlay 1014 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO). In order to detect proximity information above the display the gain of the touch-sensitive display may be increased to enable sensing of proximity information. In addition the proximity information may be detected through multiple techniques to provide proximity accuracy, for example capacitive input may be combined with optical or infrared input to provide more accurate estimations of the object position. The proximity information may comprises one or more values to provide distance, direction and velocity vectors to aid in predict a particular action that may occur.

The processor 1002 interfaces with memory 1010 providing an operating system 1046 and programs or applications 1048 providing instructions for execution by the processor 1002. The instructions when executed by the processor 1002 may provide the functionality described above. Random access memory 1008 is provided for the execution of the instructions and for processing data to be sent to or received from various components of the device. Various input/out devices or sensors may be provided such as an accelerometer 1036, light and/or infrared sensors 1038, magnetic sensor 1040 such as a Hall Effect sensor, and one or more cameras 1042 which may be used for detection of an object above the touch-sensitive input device. A communication subsystem 1004 is provided for enabling data to be sent or received with a local area network 1050 or wide area network utilizing different physical layer and access technology implementations. The communication subsystem may be utilized to request and pre-cache data based upon possible gesture event outcomes.

A subscriber identity module or removable user identity module 1062 may be provided depending on the requirement of the particular network access technology to provide user access or identify information. Short-range communications 1032 may also be provided and may include near-field communication (NFC), radio frequency identifier (RFID), Bluetooth technologies. The device may also be provided with a data port 1026 and auxiliary input/output interface for sending and receiving data. A microphone 1030 and speaker 1028 may also be provided to enable audio communications via the device 100.

The display 1012 of the touch-sensitive display 1018 may include a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area.

One or more touches, also known as contact inputs, touch contacts or gesture events, may be detected by the touch-sensitive display 1018. The processor 1002 may determine attributes of the gesture event, including a location of contact. The processor may also determine attributes associated with the gesture of the gesture event, such as a height above the screen of an object prior to the contact. Gesture event information may include an area of contact or a single point of contact, such as a point at or near a center of the area of contact, known as the centroid. A signal is provided to the controller 1016 in response to detection of a contact. A contact may be detected from any suitable object, such as a finger, thumb, appendage, or other items, for example, a stylus, pen, or other pointers, depending on the nature of the touch-sensitive display 1018. The location of the contact moves as the detected object moves during the gesture. The controller 1016 and/or the processor 1002 may detect a contact by any suitable contact member on the touch-sensitive display 1018. Similarly, multiple simultaneous touches are detected. Further, the processor may determine proximity information of a gesture prior to actual contact. Additional proximity information may include information indicative of a height of the object above the screen as well as a location on the screen the object is located above. The controller 1016 may process information from multiple inputs such as the camera 1042, light or infrared sensor 1038 in combination with overlay data to determine proximity information above the touch-sensitive input device.

Although the description discloses example methods, system and apparatus including, among other components, software executed on hardware, it should be noted that such methods and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods and apparatus, persons having ordinary skill in the art will readily appreciate that the examples provided are not the only way to implement such methods and apparatus.

In some embodiments, any suitable computer readable memory can be used for storing instructions for performing the processes described herein. For example, in some embodiments, computer readable media can be transitory or non-transitory. For example, non-transitory computer readable media can include media such as magnetic media (such as hard disks, floppy disks, etc.), optical media (such as compact discs, digital video discs, Blu-ray discs, etc.), semiconductor media (such as flash memory, electrically programmable read only memory (EPROM), electrically erasable programmable read only memory (EEPROM), etc.), any suitable memory that is not fleeting or devoid of any semblance of permanence during transmission, and/or any suitable tangible media. As another example, transitory computer readable media can include signals on networks, in wires, conductors, optical fibers, circuits, and any suitable media that is fleeting and devoid of any semblance of permanence during transmission, and/or any suitable intangible media.

## Claims

1. A method of interaction with a graphical user interface of a computing device associated with a touch-sensitive input device (100), the method comprising:
receiving proximity information (702) indicative of a proximity of an object (104, 403, 504, 604) above the touch-sensitive input device (100) as the object (104, 403, 504, 604) performs at least a portion of a gesture prior to a contact with the touch-sensitive input device;
predicting one or more possible gesture events (704) associated with the gesture based on
the proximity information and the graphical user interface based on one or more locations on the graphical user interface where the one or more possible gesture events may potentially occur; and
initiating at least one action (706) associated with at least one of the predicted one or more
possible gesture events in relation to the graphical user interface prior to the occurrence of the gesture event define by the contact with the touch-sensitive input device (100).

2. The method of claim 1 wherein the at least one action comprises pre-caching data associated with the predicted one or more possible gesture events.

3. The method of claim 1 or claim 2 wherein the at least one action that is initiated is completed when the gesture event occurs with the touch-sensitive input device, and any actions that were initiated based upon possible gestures events that did not occur are terminated.

4. The method of any preceding claim wherein the at least one action comprises modifying the user interface display of the graphical user interface in response to the predicted one or more possible gesture events.

5. The method of any preceding claim wherein predicting one or more possible gesture events comprises:
estimating a location on the graphical user interface of the input gesture based on the
proximity information; and
determining possible actions on the graphical user interface to be performed in a vicinity of
the estimated location prior to the occurrence of the gesture event.

6. The method of any preceding claim further comprising detecting the proximity information of the object when the object is above the touch-sensitive input device

7. The method of claim 6, wherein detecting the proximity information comprises:
estimating a height the object is above the touch-sensitive input device; and
determining a location of the object above the touch-sensitive input device.

8. The method of claim 6 or claim 7 wherein detecting the proximity information further comprises:
estimating a velocity of an object above the surface of the touch-sensitive interface.

9. The method of any of claims 6 to 8 wherein detecting the proximity information further comprises:
estimating a vector of motion of the object above the surface of the touch-sensitive
interface.

10. The method of any preceding claim wherein the proximity information is detected using one or more of:
a capacitive touch sensors;
a magnetic sensors;
infrared sensors; and
image capturing devices.

11. The method of any preceding claim wherein the object comprises and object selected from the group comprising:
one or more fingers;
a stylus; and
a ferromagnetic object.

12. The method of any preceding claim wherein predicting one or more possible gesture events further comprises determining proximity information after a contact occurs with the touch-sensitive input device

13. The method of any preceding claim wherein receiving proximity information comprises receiving proximity information from a plurality of objects interacting with the touch-sensitive input device in predicting the one or more gesture events.

14. A device (1000) for providing a graphical user interface coupled to a touch-sensitive input device (1018) providing a graphical user interface on a display, the device comprising:
a processor (1002);
a memory (1010) coupled to the processor comprising instructions for performing the
method of claims 1 to 13.

15. A computer readable memory containing instructions for a method of interaction with a graphical user interface of a computing device associated with a touch-sensitive input device, the instructions when executed by a processor performing the method of claims 1 to 13.

## Amended claims

### Amended claims in accordance with Rule 137(2) EPC.

**1.** A method of interaction with a graphical user interface of a computing device associated with a touch-sensitive input device (100), the method comprising:
receiving proximity information (702) indicative of a proximity of an object (104, 403, 504, 604) above the touch-sensitive input device (100) as the object (104, 403, 504, 604) performs at least a portion of a gesture prior to a contact with the touch-sensitive input device;
predicting possible gesture events (704) associated with the portion of the gesture
based on the proximity information and the graphical user interface based on one or more locations on the graphical user interface where the possible gesture events may potentially occur;
receiving further proximity information to reduce the number of predicted gesture
events and discard the associated pre-caching data;
initiating an action (706) associated with a possible gesture event in relation to the
graphical user interface prior to the completion of the gesture event defined by a contact with the touch-sensitive input device (100)the action comprises pre-caching data associated with the predicted gesture event;
detecting the completion of the gesture wherein the action that was initiated and
performing the associated action using the associated pre-cached data and terminating the initiated action by discarding any pre-cached data if the completed gesture does not match the possible gesture.

**2.** The method of 1 wherein the at least one action comprises modifying the user interface display of the graphical user interface in response to the predicted one or more possible gesture events.

**3.** The method of 1 wherein predicting one or more possible gesture events comprises:
estimating a location on the graphical user interface of the input gesture based on
the proximity information; and
determining possible actions on the graphical user interface to be performed in a
vicinity of the estimated location prior to the occurrence of the gesture event.

**4.** The method of claim 3, wherein detecting the proximity information comprises:
estimating a height the object is above the touch-sensitive input device; and
determining a location of the object above the touch-sensitive input device.

**5.** The method of claim 3 wherein detecting the proximity information further comprises:
estimating a velocity of an object above the surface of the touch-sensitive interface.

**6.** The method of claim 3 wherein detecting the proximity information further comprises:
estimating a vector of motion of the object above the surface of the touch-sensitive
interface.

**7.** The method of claim 1 wherein the proximity information is detected using one or more of:
a capacitive touch sensors;
a magnetic sensors;
infrared sensors; and
image capturing devices.

**8.** The method of claim 1 wherein the object comprises and object selected from the group comprising:
one or more fingers;
a stylus; and
a ferromagnetic object.

**9.** The method of claim 1 wherein predicting one or more possible gesture events further comprises determining proximity information after a contact occurs with the touch-sensitive input device

**10.** The method of claim 1 wherein receiving proximity information comprises receiving proximity information from a plurality of objects interacting with the touch-sensitive input device in predicting the one or more gesture events.

**11.** A device (1000) for providing a graphical user interface coupled to a touch-sensitive input device (1018) providing a graphical user interface on a display, the device comprising:
a processor (1002);
a memory (1010) coupled to the processor comprising instructions for performing
the method of claims 1 to 10.

**12.** A computer readable memory containing instructions for a method of interaction with a graphical user interface of a computing device associated with a touch-sensitive input device, the instructions when executed by a processor performing the method of claims 1 to 10.
